# EUROPEAN PATENT SPECIFICATION

(11) **EP 1 962 214 B1**
(45) Date of publication and mention of the grant of the patent: **19.02.2014**
(21) Application number: 06741761.8
(22) Date of filing: 29.04.2006
(51) Int. Cl.: G06F 21/10

(54) **METHODS FOR DOWNLOADING A DIGITAL WORK AUTOMATICALLY BOUND WITH CHARACTERISTICS OF A PORTABLE DEVICE**
VERFAHREN ZUM HERUNTERLADEN EINES DIGITALEN WERKES DAS AUTOMATISCH MIT DEN EIGENSCHAFTEN EINER TRAGBAREN VORRICHTUNG GEBUNDEN IST
PROCEDES PUR TELECHARGER UNE OEUVRE NUMERIQUE LIEE AUTOMATIQUEMENT AVEC LES CARACTERISTIQUES D'UN DISPOSITIF PORTABLE

(30) Priority: 22.11.2005 CN 200510123594
(43) Date of publication of application: 27.08.2008
(73) Proprietor: Peking University Founder Group Co., Ltd, Haidian District Beijing 100871 (CN); Beijing Founder Apabi Technology Ltd, Beijing 100080 (CN); Peking University, Beijing 100871 (CN)
(72) Inventor: TANG, Zhi, Haidian District, Beijing 100080 (CN); WANG, Changqiao, Haidian District, Beijing 100080 (CN); JIA, Aixia, Haidian District, Beijing 100080 (CN); ZHOU, Jing, Haidian District, Beijing 100080 (CN)
(74) Representative: Hirsch & Associés
(86) International application number: PCT/CN2006/000852
(87) International publication number: WO 2007/059664

(56) References cited:
- WO-A1-00/21239
- WO-A2-2005/022341
- CN-A- 1 424 662
- US-A1- 2001 011 238
- US-A1- 2004 255 139
- US-A1- 2005 060 542
- US-A1- 2005 060 578

## Description

### Technical Field

This invention refers to a technology of downloading digital works using an embodied system, more particularly, to a protection of copyright of digital works by automatically binding characteristics of a portable device to a digital work.

### Background of the Invention

As the developments of information technology and Internet, more and more digital works and digital information arise. Meanwhile, due to the existence of various piracy techniques, digital works may be illegally used, imposing a big damage to owners of the works. Digital Rights Management technology is to protect interests of the owner and ensure that the use of digital works is under authorization of the relevant owners.

Furthermore, with the developments of special e-book readers, MP3 and MP4 players, personal digital assistants (PDA), intelligent cell phones and other portable devices, more and more digital works can be used in those portable devices. Therefore, the protection of copyright of digital works becomes a need when the digital works are used in these devices.

Generally, a portable device is not configured with networking function for the sake of cost-effective. A digital work should be downloaded to a computer first and then transmitted to the portable device for use. Because of the Digital Rights Management, it is very complicated to buy and download a digital work through a computer and then transmit the digital work to the portable device. Although some portable devices like intelligent cell phones or PDAs can access Internet, due to the limited resources, downloading a copyright-protected digital work is time-consuming. Moreover, the security cannot be guaranteed.

Booklocker of Sandisk Company is a kind of U-disk. The special software in Booklocker can be started up to download and read e-books after the Booklocker is connected to a PC. Although the process is very convenient, it cannot be applied to portable devices for the following reasons. Firstly, Booklocker is initially designed to be used together with a PC. Without a PC, Booklocker does not work. To the contrary, a portable device is designed to work without needing a PC. Moreover, Booklocker divides its storage unit into a secure zone for storing downloaded e-books and an open zone. The contents in the secure zone can be read and written only by this Booklocker. But, the contents stored in the secure zone are not bound by any characteristics of Booklocker. Further, the secure zone of the Booklocker can be read and written by the software of the Booklocker via a special port, the contents in the secure zone may be read and written by a PC, which may introduce security trouble.

In addition, as disclosed in International Publication WO 03/012577 "Device-related Software Installation", an USB device is used as a mass storage device. In this case, after a USB device is connected to the PC, Windows Operating System having the Auto-run function starts up corresponding driver or the like so that the USB device can be identified for use. However, this technique is not convenient to download digital contents. Specifically, this technique needs to install a driver or the like in a PC having Auto-run function, while a portable device needs to receive data from a PC without installing any program on the PC. Moreover, due to Digital Rights Management, digital contents to be accessed need to be associated with information of a portable device. Thus, the security of the information is required. Using a USB port to transmit the information cannot meet the security requirement.

Chinese Patent Application No. 200410004751.7 entitled "hardware-compatible methods for binding digital works with hardware" filed on March 3, 2004 by the same applicant and published on January 5, 2005 discloses a method for binding, in which digital contents can be used legally with the hardware changing in a certain extent on the basis of the hardware configuration of the used PC in combination with the key share mechanism so as to achieve the hardware compatibility of digital rights protection. However, this method focuses on a general device and does not solve the problem of conveniently downloading and automatic binding for a portable device.

The document US2005/0060542-A1 discloses a method enabling a controlled media sharing in a decentralized distributed network such as a point-to-point network. The method allows to track the sharing, and to generate royalties applicable to the receiving computer system and associated with a particular instance of media. The method facilitates allowing outside instances of media to enter the network and providing compliance with copyright restrictions and/or licensing agreements associated with the instance of media.

The document WO00/21239 discloses a system wherein a user possessing an electronic reader makes an internet connection from his user PC and orders books to be read on the electronic reader. The ordered books are cryptographically bound to the electronic reader at the retailer's server and sent to the user PC, which forward them to the electronic reader via a local connection.

From above, there is a need to download digital works by using a portable device so that the copyright-protected digital works can be downloaded into the portable device conveniently and safely.

### Summary of the Invention

To overcome the shortcomings of the prior art, the present invention is to provide a method for downloading a digital work automatically bound with information of a portable device. By using this method, a program for buying or borrowing digital works can be started up automatically on a network terminal after the portable device is connected to the network terminal through a port. Then, the digital work bound with information of the portable device can be downloaded directly into the portable device after the desired digital work is selected and clicked so as to download the digital work conveniently and safely.

To this end, the present invention provides a method for downloading a digital work automatically bound with information of a portable device, comprising:
*i*) connecting the portable device 1 to a network terminal 2 through a universal port, wherein the portable device 1 comprises a storage module 4 identified as a storage device by the network terminal and an executable program stored in the storage module 4, and wherein the network terminal is capable of accessing Internet;
*ii*) executing the executable program automatically by the network terminal 2 so as to access a server 3 for dealing with a trade of digital works; and
*iii*) purchasing or borrowing a digital work via the network terminal 2 and downloading the digital work to the portable device 1, wherein the executable program encrypts characteristics of the portable device 1 and then transmits the encrypted characteristics to the server 3 after the digital work is clicked for downloading; and the digital work is downloaded to the portable device 1 after the encrypted characteristics are bound to the digital work.

Further, the storage module 4 comprises a read-only storage configured to store the executable program which is executable but is undeletable by the network terminal.

Further, the executable program and the digital work are stored in the storage module 4 mapped as a storage device in the network terminal.

Alternatively, the portable device comprises a plurality of storages mapped as a plurality of storage devices in the network terminal, wherein at least one storage is a read-only storage for storing the executed program, the other are readable and writable storages for storing digital works and other copyright-protected data.

Further, in the steps *ii*) and *iii*), the characteristics of the portable device transmitted to the server 3 acts as an identifier for login to the server 3.

Further, the characteristics transmitted to the server 3 by the executable program are encrypted data.

Further, the characteristics are bound to the digital work after the executable program logins the server 3 and accesses an interface for purchasing or borrowing the digital works, and the digital work is clicked for downloading; and then the digital work bound with the characteristics of the portable device 1 is downloaded and stored directly in the storage module 4 of the portable device 1.

Alternatively, the characteristics are bound to the digital work after the executable program logins the server 3 and starts up a web browser to access an interface for purchasing or borrowing the digital works, and the digital work is clicked for downloading; and then the digital work bound with the characteristics of the portable device 1 is downloaded and stored directly in the storage module 4 of the portable device 1.

Further, the transmitted characteristics of the portable device 1 is stored in and managed by the server 3; after the digital work is selected by a user, the server 3 encrypts authorization information of the digital work by using the transmitted characteristics of the portable device 1; and then the encrypted digital work is downloaded to the portable device 1.

Further, the characteristics of the portable device 1 are written into the executable program when the portable device is produced and capable of being read directly by the executable program.

Alternatively, the characteristics of the portable device 1 are read by the executable program via the port connecting the portable device 1 to the network terminal 2.

The present invention has the following effects. According to the method provided in the invention, digital works can be conveniently and safely downloaded to a portable device through a general hardware port without additional hardware and high cost. The method is also adapted for unskilled users to download copyright-protected digital works conveniently.

### Brief Description of the Drawing

Figure 1 schematically shows an implementation of the present invention;
Figure 2 schematically shows another implementation of the present invention; and

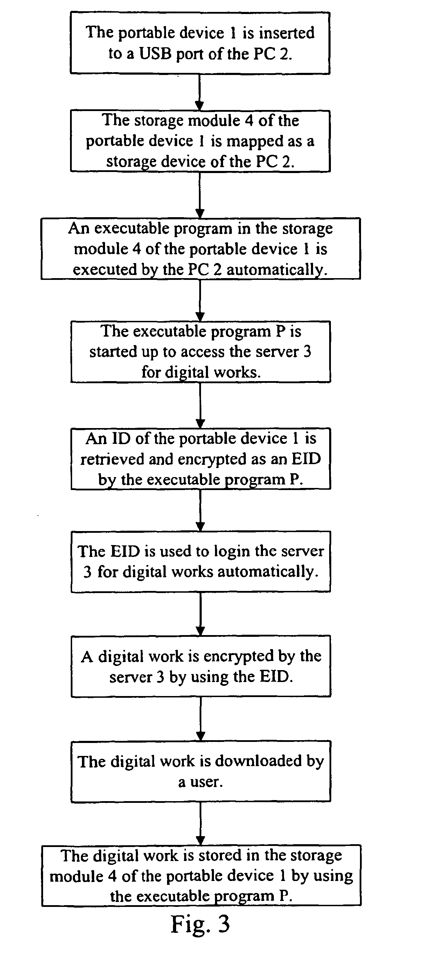

Figure 3 is a flowchart of the present invention.

### Detailed Description

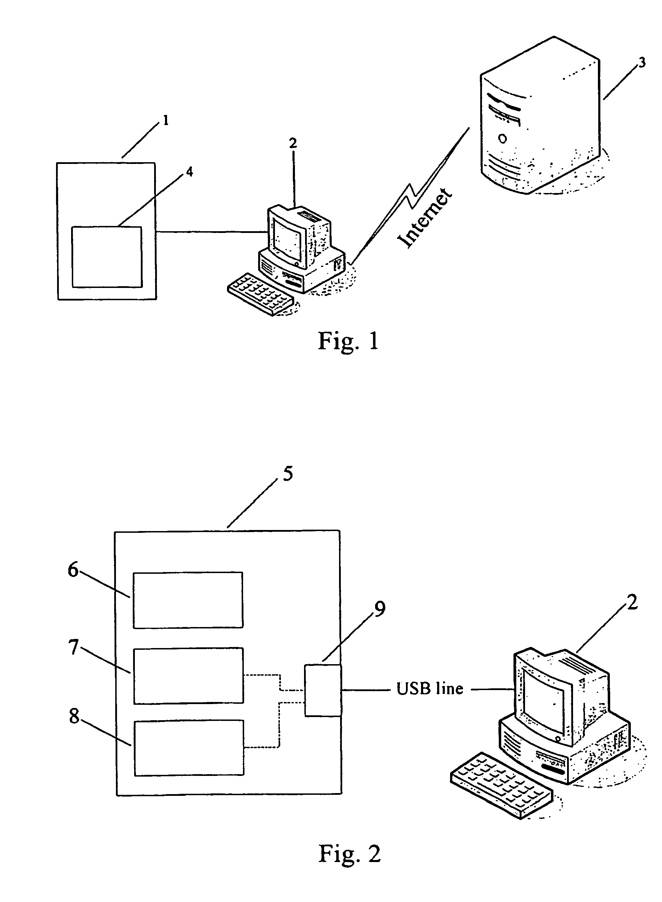

Fig. 1 shows one implementation of this invention, comprising a portable device 1, a network terminal 2 and a server 3. The portable device 1 may be an e-book reader, a PDA, a cell phone, an MP3, or the like. The network terminal 2 may be a PC with an ability of accessing Internet. The server 3 may be a server in running websites for dealing with trades in relation to digital works or other goods. The portable device is connected to the PC through a standard port such as a USB port and the PC is connected to the server via Internet. A storage module 4 is configured in the portable device for storing programs which may run in a PC, digital works to be downloaded and so on. The portable device may also comprise other components like a CPU, an operating system as well as programs executable only in the portable device.

According to the above implementation, once the portable device 1 is connected to the PC 2 through a universal port, the storage module 4 is identified as a storage device by the PC and a program *P* stored in the storage module will run automatically in the PC 2 so that a user can access a website in dealing with the trade of digital works via Internet. The program *P* is executable only in a PC so that a user can take the advantage of a PC to purchase or borrow e-works, rather than doing the same on the portable device. In view of the requirements on the protection of copyright of digital works, the program *P* associates the portable device 1 with the PC 2 so as to bind characteristics of the portable device 1 to the digital works to be accessed. Specifically, when a user clicks a digital work in order to purchase or borrow the work, the program *P* encrypts characteristics of the portable device 1 which is connected with the PC 2. The encrypted characteristics are transmitted to the server 3 for binding to the clicked digital work. In this way, the digital work bound with the encrypted characteristics of the portable device is downloaded to the portable device 1.

According to the implementation, the program *P* runs automatically in the PC 2. In Windows Operating System, if a USB device inserted to the PC is a storage device, the Windows may automatically execute commands in a file *autorun. inf* in the storage device. In this case, it is necessary to put the commands for executing the program *P* into the file *autorun. inf.* If the operating system is Windows XP and the USB device is a portable storage device, the file *autorun. inf* may not be executed automatically. Thus, for the Windows XP, the USB device of the present invention will be designed as another kind of storage device, other than a portable device.

Binding the characteristics of the portable device to digital works may be realized via various methods. For example, an ID number of a portable device may be used as the characteristic of the portable device, which is set in the production of the portable device. In order to bind the ID number to a digital work, the ID number of the portable device is transformed into a digital form by using a cryptology algorithm such as the message digest algorithm and then a decryption key of the transformed ID number is encrypted so that the encrypted digital work can be played or read only by this portable device. In the present invention, the binding may use, but not be limited to, any process having good compatibility, such as the process disclosed in the Chinese Patent Application No. 200410004751.7 "hardware-compatible methods for binding digital works with hardware".

Fig. 2 shows an embodiment of the present invention. In the embodiment, the portable device may be an e-book reader 5 including a storage unit which is divided into three zones. The first storage zone is storage module M0(6) for storing programs and data for the portable device itself, including an operating system, a reading software, a program for Copyright Management, or the like. The second zone is storage module M1(7) for storing the program *P*. The second storage zone is preset in the production of the reader. The third zone is a readable and writable storage module M2(8) for storing the download e-books. Each reader has its own ID number as an identifier of the device, including production serial number and other characteristics.

The second and third storage modules M1 and M2 are connected to the PC via a USB port 9 of the reader and identified as two storage devices, such as an E disk (M1) and an F disk (M2), in the PC. Since the program *P* with a file *autorun. inf* is stored in the E disk, the program *P* can be started up and automatically run in the PC.

Specifically, the program *P* accesses a website in dealing with the trade of e-books. The detailed flowing for trading is realized based on the specific website. In this embodiment, the ID number or the encrypted ID number of the reader is retrieved by the program *P* and recorded as an EID number. Then, the program *P* login a website by using the EID number as a unique identifier, namely, the EID number is associated with the user management of the website so that the reader's user can login the website without inputting any user name. In this embodiment, the ID number can be retrieved by the program *P* via any of the following methods. The first is to retrieve the ID number via the USB port. Since the Windows Operating System needs a driver for hardware to call the port, the ID number can be retrieved by the program *P* only after the driver is installed. The second is writing the ID number or EID number into the program *P* when the reader is produced so that the program *P* can read the ID number or EID number directly without needing a driver.

The process of buying or borrowing an e-book can be implemented in the program *P* or a web browser started up by the program *P*.

After buying or borrowing an e-book, the user downloads the e-book. In order to protect the copyright of the e-book, the e-book in this embodiment should be encrypted in the server before being downloaded. Therefore, the server uses the EID number to encrypt key information of the e-book before the e-book is downloaded. Then, the e-book with its key information is downloaded by the program *P* and directly stored in the storage module M2, i.e. the F disk.

The operating system and reading software in the reader may access the storage module M2 to retrieve the EID number. Therefore, the reader may decrypt the encrypted e-book by using the retrieved EID number so as to read the e-book. Since each reader has a unique EID number, the e-book and related data cannot be read by any other reader. Therefore, the e-book is bound to the reader.

The present invention is not limited to the above embodiments: the network terminal 2 may be another kind of terminal having networking function and the PC 2 and server 3 may be integral.

## Claims

1. A method for downloading a digital work automatically bound with characteristics of a portable device, wherein the portable device comprises a CPU, an operating system, programs executable only in the portable device, comprising:
*i*) connecting the portable device (1) to a network terminal (2) through a USB port, wherein the portable device (1) comprises a storage module (4) identified as a storage device by the network terminal and an executable program stored in the storage module (4), and wherein the network terminal is capable of accessing Internet;
*ii*) executing the executable program automatically by the network terminal (2) so as to access a server (3) for dealing with a trade of digital works; and
*iii*) purchasing or borrowing a digital work via the network terminal (2) and downloading the digital work to the portable device (1) wherein the executable program encrypts characteristics of the portable device (1) and then transmits the encrypted characteristics to the server (3) after the digital work is clicked for downloading; and the digital work is downloaded to the portable device (1) after the encrypted characteristics are bound to the digital work, by encrypting key information of the digital work;
*iv*) retrieving by the portable device the encrypted characteristic and decrypting the encrypted key information of the digital work;
wherein, in the steps *ii*) and *iii*), the characteristics of the portable device transmitted to the server (3) acts as an identifier for login to the server (3);
wherein the storage module (4) comprises a read-only storage configured to store the executable program which is executable but is undeletable by the network terminal; and
wherein the portable device comprises a plurality of storages mapped as a plurality of storage devices in the network terminal, wherein at least one storage is a read-only storage for storing the executed program, at least one is readable and writable storage for storing digital works and other copyright-protected data, and at least one is for storing operating system of the portable device and program for copyright management.

2. The method of claim 1, wherein the executable program and the digital work are stored in the storage module (4) mapped as a storage device in the network terminal.

3. The method of claim 1, wherein the characteristics transmitted to the server (3) by the executable program are encrypted data.

4. The method of claim 1, wherein the characteristics are bound to the digital work after the executable program logins the server (3) and accesses an interface for purchasing or borrowing the digital works, and the digital work is clicked for downloading; and then the digital work bound with the characteristics of the portable device (1) is downloaded and stored directly in the storage module (4) of the portable device (1).

5. The method of claim 1, wherein the characteristics are bound to the digital work after the executable program logins the server (3) and starts up a web browser to access an interface for purchasing or borrowing the digital works, and the digital work is clicked for downloading; and then the digital work bound with the characteristics of the portable device (1) is downloaded and stored directly in the storage module (4) of the portable device (1).

6. The method of claim 3, wherein the transmitted characteristics of the portable device (1) is stored in and managed by the server (3); after the digital work is selected by a user, the server (3) encrypts authorization information of the digital work by using the transmitted characteristics of the portable device (1); and then the encrypted digital work is downloaded to the portable device (1).

7. The method of claim 1, wherein the characteristics of the portable device (1) are written into the executable program when the portable device is produced and capable of being read directly by the executable program, or the characteristics of the portable device (1) are read by the executable program via the port connecting the portable device (1) to the network terminal (2).

## Patentansprüche

1. Verfahren zum Herunterladen einer digitalen Arbeit, die automatisch an Charakteristiken einer tragbaren Vorrichtung gebunden wird, wobei die tragbare Vorrichtung eine CPU, ein Betriebssystem, Programme umfasst, die nur in der tragbaren Vorrichtung ausgeführt werden können, umfassend:
i) Verbinden der tragbaren Vorrichtung (1) durch einen USB-Port mit einem Netzanschlusspunkt (2), wobei die tragbare Vorrichtung (1) ein Speichermodul (4), das durch den Netzanschlusspunkt als eine Speichervorrichtung identifiziert wird, und ein ausführbares Programm umfasst, das im Speichermodul (4) gespeichert ist, und wobei der Netzanschluss auf das Internet zugreifen kann;
ii) automatisches Ausführen des ausführbaren Programms durch den Netzanschlusspunkt (2), um auf einen Server (3) zuzugreifen, um einen Handel von digitalen Arbeiten vorzunehmen; und
iii) Erwerben oder Entleihen einer digitalen Arbeit über den netzanschlusspunkt (2) und Herunterladen der digitalen Arbeit auf die tragbare Vorrichtung (1), wobei das ausführbare Programm Charakteristiken der tragbaren Vorrichtung (1) verschlüsselt und die verschlüsselten Charakteristiken dann an den Server (3) sendet, nachdem die digitale Arbeit zum Herunterladen angeklickt wurde; und die digitale Arbeit auf die tragbare Vorrichtung (1) heruntergeladen wird, nachdem die verschlüsselten Charakteristiken durch Verschlüsseln von Schlüsselinformationen der digitalen Arbeit an die digitale Arbeit gebunden wurden;
iv) Abrufen durch die tragbare Vorrichtung der verschlüsselten Charakteristik und Entschlüsseln der verschlüsselten Schlüsselinformationen der digitalen Arbeit;
wobei in Schritt ii) und iii) die Charakteristiken der tragbaren Vorrichtung, die an den Server (3) gesendet werden, als Kennung zum Anmelden beim Server (3) fungieren;
wobei das Speichermodul (4) einen Festwertspeicher umfasst, der so konfiguriert ist, dass er das ausführbare Programm speichert, das durch den Netzanschlusspunkt ausgeführt, aber nicht gelöscht werden kann; und
wobei die tragbare Vorrichtung eine Mehrzahl von Speichern umfasst, die als eine Mehrzahl von Speichervorrichtungen im Netzanschlusspunkt abgebildet sind, wobei mindestens ein Speicher ein Festwertspeicher zum Speichern des ausgeführten Programms ist, mindestens einer ein les- und beschreibbbarer Speicher zum Speichern von digitalen Arbeiten und anderen urheberrechtlich geschützten Daten ist und mindestens einer zum Speichern des Betriebssystems der tragbaren Vorrichtung und eines Programms für Urheberrechtsverwaltung ist.

2. Verfahren nach Anspruch 1, wobei das ausführbare Programm und die digitale Arbeit in dem Speichermodul (4) gespeichert werden, das als eine Speichervorrichtung im Netzanschlusspunkt abgebildet ist.

3. Verfahren nach Anspruch 1, wobei die Charakteristiken, die durch das ausführbare Programm an den Server (3) gesendet werden, verschlüsselte Daten sind.

4. Verfahren nach Anspruch 1, wobei die Charakteristiken an die digitale Arbeit gebunden werden, nachdem sich das ausführbare Programm beim Server (3) angemeldet und auf eine Schnittstelle zum Erwerben oder Entleihen der digitalen Arbeiten zugegriffen hat, und die an die Charakteristiken der tragbaren Vorrichtung (1) gebundene digitale Arbeit dann heruntergeladen und direkt im Speichermodul (4) der tragbaren Vorrichtung (1) gespeichert wird.

5. Verfahren nach Anspruch 1, wobei die Charakteristiken an die digitale Arbeit gebunden werden, nachdem sich das ausführbare Programm beim Server (3) angemeldet und einen Webbrowser zum Zugriff auf eine Schnittstelle zum Erwerben oder Entleihen der digitalen Arbeiten aufgerufen hat und die digitale Arbeit zum Herunterladen angeklickt wurde; und die an die Charakteristiken der tragbaren Vorrichtung (1) gebundene digitale Arbeit dann heruntergeladen und direkt im Speichermodul (4) der tragbaren Vorrichtung (1) gespeichert wird.

6. Verfahren nach Anspruch 3, wobei die gesendeten Charakteristiken der tragbaren Vorrichtung (1) im Server (3) gespeichert und dadurch verwaltet werden; der Server (3), nachdem die digitale Arbeit durch einen Benutzer ausgewählt wurde, Berechtigungsinformationen der digitalen Arbeit durch Verwenden der gesendeten Charakteristiken der tragbaren Vorrichtung (1) verschlüsselt; und die verschlüsselte digitale Arbeit dann auf die tragbare Vorrichtung (1) heruntergeladen wird.

7. Verfahren nach Anspruch 1, wobei die Charakteristiken der tragbaren Vorrichtung (1) in das ausführbare Programm geschrieben werden, wenn die tragbare Vorrichtung so hergestellt und ausgelegt ist, dass sie direkt durch das ausführbare Programm gelesen werden kann, oder die Charakteristiken der tragbaren Vorrichtung (1) durch das ausführbare Programm über den Port ausgelesen werden, der die tragbare Vorrichtung (1) mit dem Netzanschlusspunkt (2) verbindet.

## Revendications

1. Procédé de téléchargement d'un ouvrage numérique lié automatiquement à des caractéristiques d'un dispositif portable, dans lequel le dispositif comprend une UC, un système d'exploitation, des programmes uniquement exécutables sur le dispositif portable, comprenant :
*i*) connecter le dispositif portable (1) à un terminal de réseau (2) par une prise USB, dans lequel le dispositif portable (1) comprend un module de stockage (4) identifié comme dispositif de stockage par le terminal de réseau et un programme exécutable stocké dans le module de stockage (4), et dans lequel le terminal de réseau est capable d'accéder à Internet ;
*ii*) faire exécuter le programme automatiquement par le terminal de réseau (2) afin d'accéder à un serveur (3) pour traiter avec un commerce d'ouvrages numériques ;
et
*iii)* acheter ou emprunter un ouvrage numérique via le terminal de réseau (2) et télécharger l'ouvrage numérique vers le dispositif portable (1) dans lequel le programme exécutable chiffre les caractéristiques du dispositif portable (1) puis transmet les caractéristiques chiffrées au serveur (3) après qu'on a cliqué sur l'ouvrage numérique pour le télécharger ; et l'ouvrage numérique est téléchargé sur le dispositif portable (1) après que les caractéristiques chiffrées sont liées à l'ouvrage numérique, par chiffrement d'informations clés de l'ouvrage numérique ;
iv) faire récupérer par le dispositif portable les caractéristiques chiffrées et déchiffrer les informations clés chiffrées de l'ouvrage numérique ;
dans lequel, aux étapes *ii)* et *iii),* les caractéristiques du dispositif portable transmises au serveur (3) agissent comme identifiant de connexion au serveur (3) ;
dans lequel le module de stockage (4) comprend un stockage en lecture seule configuré pour stocker le programme exécutable lequel peut être exécuté mais non supprimé du terminal de réseau ; et
dans lequel le dispositif portable comprend une pluralité de stockages mappés comme une pluralité de dispositifs de stockage dans le terminal de réseau, dans lequel au moins un stockage est un stockage en lecture seule pour stocker le programme exécuté, au moins l'un est un stockage lisible et inscriptible pour stocker des ouvrages numériques et autres données protégées par droits d'auteur, et au moins un sert au stockage du système d'exploitation du dispositif portable et du programme de gestion des droits d'auteur.

2. Procédé selon la revendication 1, dans lequel le programme exécutable et l'ouvrage numérique sont stockés dans le module de stockage (4) mappé comme dispositif de stockage dans le terminal de réseau.

3. Procédé selon la revendication 1, dans lequel les caractéristiques transmises au serveur (3) par le programme exécutable sont des données chiffrées.

4. Procédé selon la revendication 1, dans lequel les caractéristiques sont liées à l'ouvrage numérique après que le programme exécutable se connecte au serveur (3) et accède à une interface servant à acheter ou emprunter les ouvrages numériques, et après qu'on clique sur l'ouvrage numérique pour le télécharger ; l'ouvrage numérique lié aux caractéristiques du dispositif portable (1) est alors téléchargé et enregistré directement dans le module de stockage (4) du dispositif portable (1).

5. Procédé selon la revendication 1, dans lequel les caractéristiques sont liées à l'ouvrage numérique après que le programme exécutable se connecte au serveur (3) et lance un navigateur web pour accéder à une interface servant à acheter ou emprunter les ouvrages numériques, et après qu'on clique sur l'ouvrage numérique pour le télécharger ; l'ouvrage numérique lié aux caractéristiques du dispositif portable (1) est alors téléchargé et stocké directement dans le module de stockage (4) du dispositif portable (1).

6. Procédé selon la revendication 3, dans lequel les caractéristiques transmises du dispositif portable (1) sont stockées et gérées par le serveur (3) ; après que l'ouvrage numérique est sélectionné par un utilisateur, le serveur (3) chiffre les informations d'autorisation de l'ouvrage numérique en employant les caractéristiques transmises du dispositif portable (1) ; et l'ouvrage numérique est alors téléchargé vers le dispositif portable (1).

7. Procédé selon la revendication 1, dans lequel les caractéristiques du dispositif portable (1) sont écrites dans le programme exécutable, quand le dispositif portable est produit, et peuvent être lues directement par le programme exécutable, ou bien les caractéristiques du dispositif portable (1) sont lues par le programme exécutable par la prise reliant le dispositif portable (1) au terminal de réseau (2).
